# EUROPEAN PATENT SPECIFICATION

(11) **EP 1 298 231 B1**
(45) Date of publication and mention of the grant of the patent: **20.04.2011**
(21) Application number: 02079075.4
(22) Date of filing: 30.09.2002
(51) Int. Cl.: C25B 15/00, C02F 1/461

(54) **Apparatus for carrying out an electrolytic process on a halogenide compound**
Vorrichtung zur Ausführung eines elektrolytischen Verfahrens auf einer Halogenverbindung
Dispositif pour effectuer un procédé electrolytique sur un composé hallogéné

(30) Priority: 01.10.2001 NL 1019070
(43) Date of publication of application: 02.04.2003
(73) Proprietor: Zilvold, Gerrit Albert, NL-8084 JD 't Harde (NL)
(72) Inventor: Zilvold, Gerrit Albert, NL-8084 JD 't Harde (NL)
(74) Representative: Valkonet, Rutger

(56) References cited:
- WO-A-98/32900
- DE-A- 19 910 639
- US-A- 3 274 094
- US-A- 3 997 414
- US-A- 5 064 514
- US-A- 5 082 543

## Description

The present invention relates to an apparatus for carrying out an electrolytic process on a halogenide compound, in which apparatus several electrolytic cells are electrically connected in series, which electrolytic cells each comprise a cell element, provided with underlying supply pipes for supplying electrolyte and with collecting discharge pipes disposed near the upper side thereof for discharging electrolyte and the gases formed during the electrolytic process, a cathode compartment including a cathode and an anode compartment including an anode, and a diaphragm or semi-permeable membrane, in which the electrolytic cells have been pressed together between two end plates with a certain bias, so that each anode compartment and each cathode compartment is constructed as one unit together with the supply pipes and the collecting discharge pipes.

From US patent No 5,064,514 there is known an arrangement for the preparation of chloric acid from hypochlorous acid, which arrangement comprises only one mono-cell construction. The arrangement that is known from said document does not comprise a bipolar electrode or intermediate plate, therefore. The cooling system used with said arrangement consists of two cooling plates arranged adjacently to the anode and cathode backplates, which plates have a hollowed out or grooved area which is open on the side adjacent to the anode and the cathode, but which is closed and solid at the surface of the cooling plate on the side adjacent to the backplates. This grooved area will permit the circulation of a coolant to control the heat generated during the electrolytic process. As a result of the construction used therein, the coolant is in direct electrical contact with the electrodes

From US patent No 5,082,543 there is known an electrolytic cell of the filter press type for the production of peroxy and perhalogenate compounds. The cell that is known from said document is of the semi-filter press type, because each cell is separately electrically connected. Consequently, a bipolar electrode or intermediate plate is not used. The electrodes that are used, which are completely made of a metal, are double-walled, between which parallel walls a coolant is pumped. In practice, full submersion in coolant of this cell is not possible within reason because of the great number of electrical connections. As a result of the construction of the double-walled electrodes, the coolant that is passed therethrough is under an electrode voltage.

WO 98/32900 A discloses an apparatus for the electrolytic production of chlorine. The apparatus comprises a plurality of cells within a casing. Between the casing and elements of the cell there is a liquid jacket.

From German Offenlegungsschrift No 199 10 639 there is known a reactor for generating ozone; said document does not provide any information as regards the electrolytic cell that is used, however.

The apparatus referred to in the introduction is known per se from NL 8303210, in which chlorine gas intended for chlorinating water, such as swimming pool water, drinking water or waste water, is prepared by means of an electrolytic process. Said Dutch laid-open document shows an electrolytic cell built up of two anode compartments and two cathode compartments arranged in alternating relationship. Disposed between a first anode compartment and a first cathode compartment is a membrane made from a material which is suitable for this purpose, which membrane is permeable to cations and impermeable to anions. A similar modular cell unit is formed by the second anode compartment, the second cathode compartment and the cation-permeable membrane disposed therebetween. The modular cell units are arranged adjacently to each other, with the interposition of a liquid-impermeable gasket or insulator. End plates are arranged at the ends of the structure of cell units, through which plates tie rods or other suitable fixing means are passed, which tie rods also extend through the cell units so as to keep the entire structure together in this way. Each cell element is provided with a collecting pipe, also called degasser, in which the gas formed during the electrolytic process separates from the electrolyte.

One drawback of the apparatus as discussed above is the fact that the temperature of the series-connected electrolytic cells can rise to undesirable levels. For chemical and mechanical reasons, it is thus desirable in practice to have a possibility of influencing the temperature. In practice, so-called heat exchangers are used for this purpose, which heat exchangers are installed outside the cell block, however, which means that the temperature is influenced externally. Such external influencing cannot prevent the electrolytic cells in particular from exhibiting an impermissible thermal deviation in the centre of the cell package, however. Thus it is desirable to provide an apparatus by means of which thermal influencing can be effected mainly at the position where the thermal deviation is greatest.

The object of the present invention is thus to provide an apparatus for carrying out an electrolytic process on a halogenide compound, which apparatus provides a possibility of internal thermal influencing at the position at which the thermal deviation originates, thus ensuring internal thermal stability.

Another object of the present invention is to provide an apparatus for carrying out an electrolytic process on a halogenide compound, which apparatus collects the corrosive fluids and gases that may have formed due to leakage.

According to the present invention, the invention as referred to in the introduction is characterized in that the assembly of end plates and electrolytic cells is present in a container which contains a liquid, heat-transferring medium, with an electrically non-conducting cell partition being present between the cathode and the anode, which cell partition, in addition to supply pipes and collecting discharge pipes corresponding to the cell element, comprises one or more through channels for the passage therethrough of the heat-transferring medium that is present in the container, which channels have been formed in the cell partition in such a manner that the heat-transferring medium that is present in the channels is not under an electric voltage, and that no liquid contact takes place between the electrolyte that is present in the electrolytic cells and the heat-transferring medium that is present in the container, outside the electrolytic cells.

According to the present invention, the complete cell package, including the two end plates, is thus placed in a heat-transferring medium, for example water, in which the heat-transferring medium in fact performs two functions, viz. the function of a cooling medium, both internally in the through channels that are present in the cell partition and externally in the container outside the electrolytic cells, and the function of a medium that catches any leakage. Because a significant part of the electric energy that is supplied for the electrolytic process is collected in the heat-transferring medium as a result of the cooling action effected in the present invention, energy recovery becomes feasible, as a result of which an energy saving is achieved.

In principle, the through channels that are used in the present invention may have any conceivable sectional shape, for example circular, rectangular, trapezoidal and the like. The present invention is in particular used in environments where gaseous halogenides are wanted, for example for use as a disinfectant for swimming pools or drinking water.

In one preferred embodiment, each combination of cathode and anode is separated by the present cell partition, so that a cooling function will at all times be performed at the position where heat is being generated. Preferably, a bipolar electrode is used.

In a special embodiment it is desirable for the heat-transferring medium that is present in the container to be passed through a through channel in a forced manner, which can be effected, for example, by placing one or more pumps.

The heat-transferring medium that is present in the container can also be utilised for regulating the temperature in the electrolytic cell package and thus the temperature of the electrolytic process, for example by varying the temperature of the medium and/or the rate of circulation, for example by means of forced circulation, using one or more pumps. Because the complete electrolysis unit is submersed in the heat-transferring medium, the risk of gases or electrolytes leaking out is also prevented.

A special embodiment of the present invention is characterized in that a reversing element is disposed adjacently to the electrolytic cell package, which reversing element is provided with underlying supply pipes for supplying electrolyte to the adjacent electrolytic cell package, and furthermore with collecting discharge pipes disposed near the upper side thereof for discharging electrolyte and the gases formed during the electrolytic process in the adjacent electrolytic cell package, for effecting the return of electrolyte from the collecting discharge pipes to the supply pipes, which reversing element is provided with one or more through channels for the passage therethrough of the heat-transferring medium, which channels are so configured that no liquid contact takes place between the electrolyte that is present in the electrolytic cells and the heat transferring medium that is present in the container, outside the electrolytic cells.

In a special embodiment, the electrically non-conducting cell partition is provided with means for electrically interconnecting the various adjacent electrodes without any exchange of electrolyte between the two electrolytic cells via said connection or electrolytic corrosion between the various electrode metals taking place.

In addition to that it is possible to lead the depleted electrolytes to be discharged after the electrolytic process through the heat transferring medium present in the container via a pipe, so that the thermal energy contained in the electrolytes is transferred to the heat-transferring medium.

The present invention will be explained hereinafter with reference to a number of drawings, which drawings must not be construed as constituting a limitation of the invention, however.

Figure 1 is a perspective view of the present apparatus.

Figure 2 is a schematic cross sectional view of the apparatus of Figure 1.

Figure 3 is a schematic representation of the present cell partition.

Figure 4 is a schematic representation of the cell partition of Figure 3.

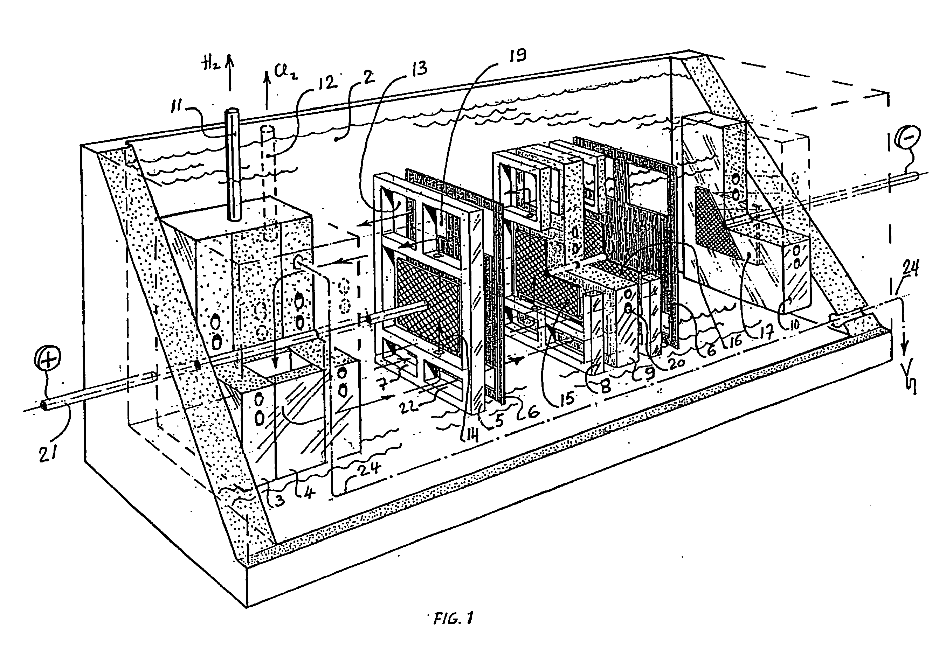

According to Figure 1, two electrolytic cells of the filter press type, which are electrically connected in series, are present in a container 1 which contains a heat-transferring medium 2, for example water; for the sake of simplicity, the elements for supplying electrolyte, for example HCl, are not shown in the figure. It should be understood that the present invention is by no means restricted to such a number. The anode 14 is separated from the cathode 15 by a semi-permeable membrane 6. Cathode 15 is separated from anode 16 by means of a cell partition 9, and anode 16 is in turn separated from cathode 17 by the semi-permeable membrane 6. The electrolyte that passes through the electrolytic cells via collecting discharge pipes 13, 19 and supply pipes 7 and 22 for supplying electrolyte is subjected to an electrolytic process at the anode, during which process chlorine gas is formed, for example, which chlorine gas ends up in collecting discharge pipes 19 via the anode compartment and subsequently exits the apparatus via gas discharge pipe 12. Hydrogen gas is formed at the cathode 15, 17 as a result of the electrolytic process, which hydrogen gas rises from the cathode compartment and collects in the collecting discharge pipe 13, in which collecting discharge pipes 13 a separation between electrolyte and hydrogen gas takes place. From the collecting discharge pipes 13, the electrolyte, which is still hot, can subsequently be discharged from the apparatus via the pipe 24, which pipe 24 is led through the medium to so as to effect a transfer of energy. Finally, the hydrogen gas that has formed in the electrolysis apparatus is discharged via the pipe 11. In order to effect a proper flow of electrolyte in the present apparatus, it is preferred to use a reversing element 4 which is provided with underlying supply pipes for supplying electrolyte to the adjacent electrolytic cell package, and which is further provided with collecting discharge pipes disposed near the upper side thereof for discharging electrolyte and the gases formed during the electrolytic process in the adjacent electrolysis package, for effecting the return of electrolyte from the collecting discharge pipes to the supply pipes. In order to be able to control the temperature of the electrolyte that is present in the reversing element, the reversing element is provided with one or more through channels (not shown) for the passage therethrough of the heat transferring medium 2, which channels are so configured that no liquid contact takes place between the electrolyte that is present in the electrolytic cells and the heat-transferring medium that is present in the container, outside the electrolytic cells.

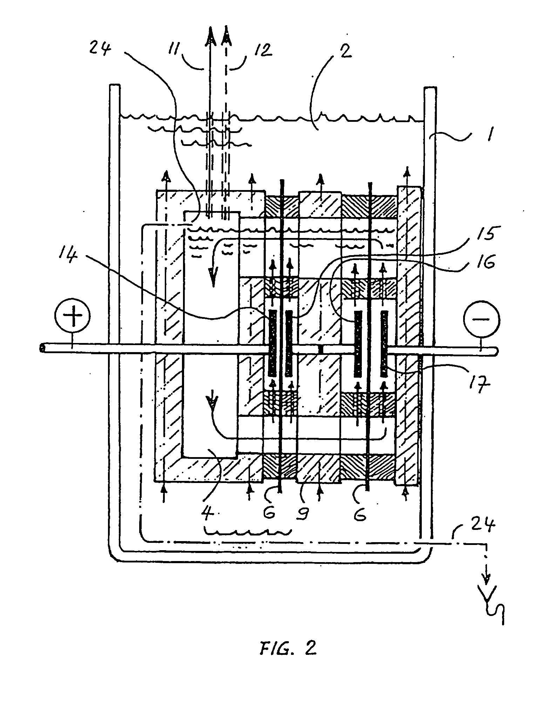

Figure 2 is a schematic side elevation of the electrolysis apparatus of Figure 1. In Figure 2 the flow of electrolyte within the electrolytic cell package is indicated by means of arrows, from which it is apparent that the reversing element 4 arranges for the liquid from the collecting discharge pipes 13, 19 to be returned to the supply pipes 7 and 22 for supplying electrolyte to the electrolytic cells in question.

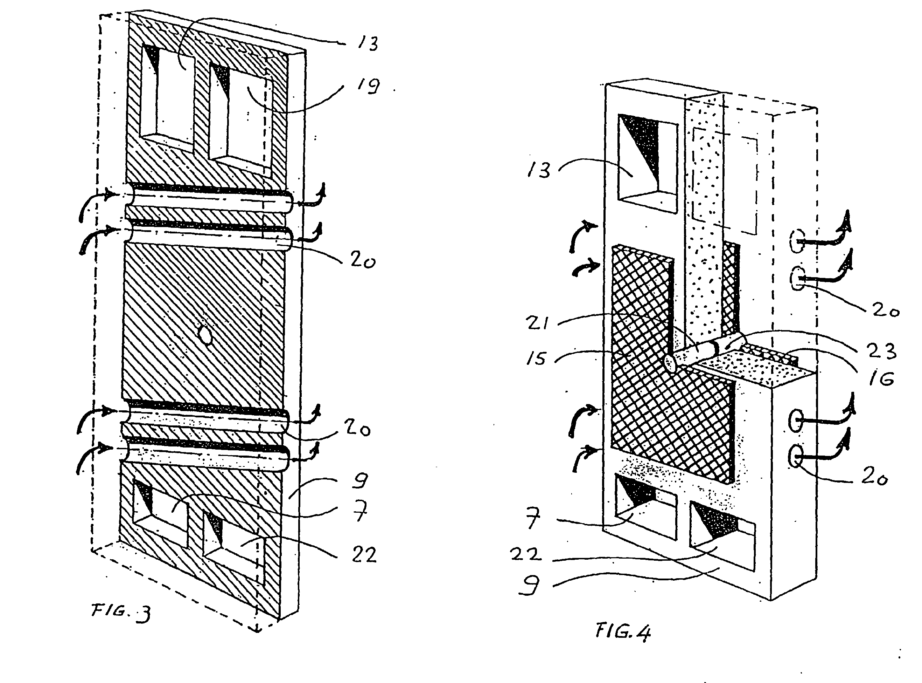

Figure 3 is a cut-away view of an embodiment of the present cell partition 9, in which the through channels 20 are schematically indicated. The through channels 20 arrange for a temperature regulation to be carried out at the position at which the development of heat mainly takes place, viz. on the surface of the electrodes, in particular by passing heat-transferring medium through the channels 20. The cell partition 9 that is shown in Figure 3 may be formed of two symmetrical halves, in one of which (or in each of which) through channels 20 have been milled out, after which the two halves have been assembled to form one unit comprising the through channels 20. By thus disposing the channels slightly at an angle, said channels will readily fill with the heat-transferring medium upon submersion of the whole of end plates and the electrolytic cells in the heat-transferring medium.

Figure 4 shows the cell partition 9, with an anode 15 disposed on one side and a cathode 16 disposed on the other side thereof. The anode 15 and the cathode 16 are electrically interconnected via connection 21, 23 consisting of two different metals, which connection 21, 23 is so designed that no exchange of electrolyte between the two electrolytic cells can take place via said connection 21, 23. It will be apparent from Figure 4 that any cooling that may be desired will take place at the position where the development of heat mainly takes place, viz. close to anode 15 and cathode 16, in particular by passing the heat transferring medium 2 through the cell partition 9 via one or more through channels 20.

## Claims

1. An apparatus for carrying out an electrolytic process on a halogenide compound, in which apparatus several electrolytic cells are electrically connected in series, which electrolysis cells each comprise a cell element, provided with underlying supply pipes for supplying electrolyte and with collecting discharge pipes disposed near the upper side thereof for discharging electrolyte and the gases formed during the electrolytic process, a cathode compartment including a cathode and an anode compartment including an anode, and a diaphragm or semi-permeable membrane, in which the electrolytic cells have been pressed together between two end plates with a certain bias, so that each anode compartment and each cathode compartment is constructed as one unit together with the supply pipes and the collecting discharge pipes, **characterized in that** the assembly of end plates and electrolytic cells is present in a container which contains a liquid, heat-transferring medium, with an electrically non-conducting cell partition being present between the cathode and the anode, which cell partition, in addition to supply pipes and collecting discharge pipes corresponding to the cell element, comprises one or more through channels for the passage therethrough of the heat-transferring medium that is present in the container, which channels have been formed in the cell partition in such a manner that the heat-transferring medium that is present in the channels is not under an electric voltage, and that no liquid contact takes place between the electrolyte that is present in the electrolytic cells and the heat-transferring medium that is present in the container, outside the electrolytic cells.

2. An apparatus according to claim 1, **characterized in that** a reversing element is disposed adjacently to the electrolytic cell package, which reversing element is provided with underlying supply pipes for supplying electrolyte to the adjacent electrolytic cell package, and furthermore with collecting discharge pipes disposed near the upper side thereof for discharging electrolyte and the gases formed during the electrolytic process in the adjacent electrolytic cell package, for effecting the return of electrolyte from the collecting discharge pipes to the supply pipes, which reversing element is provided with one or more through channels for the passage therethrough of the heat-transferring medium, which channels are designed in such a manner that no liquid contact takes place between the electrolyte that is present in the electrolytic cells and the heat transferring medium that is present in the container, outside the electrolytic cells.

3. An apparatus according to any one or more of the preceding claims, **characterized in that** the electrically non-conducting cell partition is provided with means for electrically interconnecting the various adjacent electrodes without any exchange of electrolyte between the two electrolytic cells via said connection or electrolytic corrosion between the various electrode metals taking place.

4. An apparatus according to any one or more of the preceding claims, **characterized in that** the electrolytes are discharged from the apparatus via a pipe arranged in the heat transferring medium in the container, so as to transfer the thermal energy contained in the electrolytes to the heat-transferring medium.

## Patentansprüche

1. Vorrichtung zum Ausführen eines elektrolytischen Prozesses an einer Halogenidverbindung, wobei in der Vorrichtung mehrere Elektrolysezellen elektrisch in Reihe geschaltet sind, wobei die Elektrolysezellen jeweils ein Zellenelement umfassen, das mit darunterliegenden Zufuhrrohren zum Zuführen eines Elektrolyten und mit Sammelablassrohren versehen ist, die nahe dessen Oberseite angeordnet sind, um den Elektrolyt und die Gase abzuführen, die sich während des elektrolytischen Prozesses bilden, eine Kathodenkammer, die eine Kathode enthält, eine Anodenkammer, die eine Anode enthält, und eine Scheidewand oder semipermeable Membran, wobei in der Vorrichtung die Elektrolysezellen zwischen zwei Endplatten mit einer gewissen Vorspannung zusammengedrückt sind, so dass jede Anodenkammer und jede Kathodenkammer zusammen mit den Zufuhrrohren und den Sammelablassrohren als eine Einheit aufgebaut ist, **dadurch gekennzeichnet, dass** die Baueinheit aus Endplatten und Elektrolysezellen in einem Behälter vorhanden ist, der ein flüssiges Wärmeübertragungsmedium enthält, wobei zwischen der Kathode und der Anode eine elektrisch nichtleitende Zellentrennwand vorhanden ist, welche Zellentrennwand zusätzlich zu den dem Zellenelement entsprechenden Zufuhrrohren und Sammelablassrohren eine oder mehrere Durchgangskanäle aufweist, um das im Behälter vorhandene Wärmeübertragungsmedium dort hindurchzuleiten, welche Kanäle in der Zellentrennwand so gebildet sind, dass das in den Kanälen vorhandene Wärmeübertragungsmedium nicht unter elektrischer Spannung steht, und dass zwischen dem in den Elektrolysezellen vorhandenen Elektrolyten und dem in dem Behälter außerhalb der Elektrolysezellen vorhandenen Wärmeübertragungsmedium kein Flüssigkeitskontakt besteht.

2. Vorrichtung nach Anspruch 1, **dadurch gekennzeichnet, dass** ein Umkehrelement angrenzend an das Gehäuse der Elektrolysezelle angeordnet ist, welches Umkehrelement mit darunterliegenden Zufuhrrohren, um dem angrenzenden Gehäuse der Elektrolysezelle einen Elektrolyt zuzuführen, und darüber hinaus mit Sammelablassrohren versehen ist, die nahe dessen Oberseite angeordnet sind, um den Elektrolyt und die Gase abzuführen, die sich während des elektrolytischen Prozesses in dem angrenzenden Gehäuse der Elektrolysezelle bilden, um die Rückführung des Elektrolyten von den Sammelablassrohren zu den Zufuhrrohren zu bewirken, welches Umkehrelement mit einem oder mehreren Durchgangskanälen versehen ist, um das Wärmeübertragungsmedium dort hindurchzuleiten, welche Kanäle so ausgelegt sind, dass zwischen dem in den Elektrolysezellen vorhandenen Elektrolyten und dem in dem Behälter außerhalb der Elektrolysezellen vorhandenen Wärmeübertragungsmedium kein Flüssigkeitskontakt besteht.

3. Vorrichtung nach einem oder mehreren der vorhergehenden Ansprüche, **dadurch gekennzeichnet, dass** die elektrisch nichtleitende Zellentrennwand mit Einrichtungen versehen ist, um die verschiedenen angrenzenden Elektroden elektrisch miteinander zu verbinden, ohne dass ein Elektrolytaustausch zwischen den beiden Elektrolysezellen über die Verbindung oder eine elektrolytische Korrosion zwischen den verschiedenen Elektrodenmetallen stattfindet.

4. Vorrichtung nach einem oder mehreren der vorhergehenden Ansprüche, **dadurch gekennzeichnet, dass** die Elektrolyte aus der Vorrichtung über ein Rohr abgeführt werden, das in dem Wärmeübertragungsmedium im Behälter angeordnet ist, um die in den Elektrolyten enthaltene Wärmeenergie auf das Wärmeübertragungsmedium zu übertragen.

## Revendications

1. Appareil destiné à réaliser un processus électrolytique sur un composé halogénure, ledit appareil comprenant plusieurs cellules électrolytiques qui sont connectées électriquement en série, lesdites cellules électrolytiques comprenant chacune un élément de cellule, doté de tubes d'alimentation sous-jacents pour l'alimentation en électrolyte et de tubes de collecte et de décharge disposés près de l'extrémité supérieure afin de décharger l'électrolyte et les gaz formés dans le processus électrolytique, un compartiment cathodique contenant une cathode et un compartiment anodique contenant une anode, ainsi qu'un diaphragme ou une membrane semiperméable, dans lequel les cellules électrolytiques ont été pressées les unes contre les autres entre deux plaques d'extrémité avec une certaine contrainte, si bien que chaque compartiment anodique et chaque compartiment cathodique est construit sous la forme d'une unité, avec les tubes d'alimentation et les tubes de collecte et de décharge, **caractérisé en ce que** l'ensemble des plaques d'extrémité et des cellules électrolytiques est placé dans un conteneur qui contient un milieu liquide de transfert de chaleur, avec une partie de cellule électriquement non conductrice qui est implantée entre la cathode et l'anode, ladite partie de cellule comprenant, en plus des tubes d'alimentation et des tubes de collecte et de décharge correspondant à l'élément de cellule, un ou plusieurs canaux traversants pour le passage du fluide de transfert de chaleur qui est présent dans le conteneur, lesdits canaux ayant été formés dans la partie de cellule de manière à ce que le fluide de transfert de chaleur qui est présent dans les canaux ne soit pas soumis à une tension électrique et qu'il ne se produise pas de contact liquide entre l'électrolyte qui est présent dans les cellules électrolytiques et le fluide de transfert de chaleur qui est présent dans le conteneur, en dehors des cellules électrolytiques.

2. Appareil selon la revendication 1, **caractérisé en ce qu'**un élément d'inversion est disposé adjacent à l'ensemble de cellules électrolytiques, ledit élément d'inversion étant doté de tubes d'alimentation sous-jacents destinés à fournir de l'électrolyte à l'ensemble de cellules électrolytiques adjacent, ainsi que de tubes de collecte et de décharge disposés près de l'extrémité supérieure afin de décharger l'électrolyte et les gaz formés dans le processus électrolytique, afin de réaliser le retour de l'électrolyte entre les tubes de collecte et de décharge et les tubes d'alimentation, ledit élément d'inversion étant doté d'un ou plusieurs canaux pour le passage du fluide de transfert de chaleur, lesdits canaux étant conçus de manière à ce qu'il ne se produise pas de contact liquide entre l'électrolyte qui est présent dans les cellules électrolytiques et le fluide de transfert de chaleur qui est présent dans le conteneur, en dehors des cellules électrolytiques.

3. Appareil selon une ou plusieurs des revendications précédentes, **caractérisé en ce que** la partie de cellule électriquement non conductrice est dotée de moyens destinés à interconnecter électriquement les différentes électrodes adjacentes sans aucun échange d'électrolyte entre les deux cellules électrolytiques par ladite connexion et sans corrosion électrolytique entre les différents métaux des électrodes.

4. Appareil selon une ou plusieurs des revendications précédentes, **caractérisé en ce que** les électrolytes sont déchargés de l'appareil à l'aide d'un tube placé dans le fluide de transfert de chaleur dans le conteneur, afin de transférer au fluide de transfert de chaleur l'énergie thermique contenue dans les électrolytes.
